# EUROPÄISCHE PATENTANMELDUNG

(11) **EP 1 338 695 A1**
(43) Veröffentlichungstag der Anmeldung: **27.08.2003**
(21) Anmeldenummer: 03002578.7
(22) Anmeldetag: 07.02.2003
(51) Int. Cl.: D06M 15/643, D06M 15/65, C08J 3/03, C08G 77/04, C08G 77/06, C08L 83/04, C08L 83/06

(54) **Flammpunktfreies Textilbehandlungsmittel, dessen Herstellung und Verwendung**

(30) Priorität: 20.02.2002 DE 10207087
(71) Anmelder: Bayer Aktiengesellschaft, 51368 Leverkusen (DE)
(72) Erfinder: Gerle, Michael, Dr., 50127 Bergheim (DE); Guth, Winfried, 51519 Odenthal (DE); Meier, Helmut-Martin, Dr., 40883 Ratingen (DE); Hermanns, Anton, 51519 Odenthal (DE); Wiechmann, Jan-Dieter, 51465 Bergisch Gladbach (DE)

(57) **Zusammenfassung**

Bereitgestellt werden ein flammpünktfreies Textilbehandlungsmittel, ein Verfahren zu dessen Herstellung, dessen Verwendung zur Behandlung von Textilmaterialien sowie entsprechend behandelte Textilmaterialien.

## Beschreibung

Die vorliegende Erfindung betrifft ein flammpunktfreies Textilbehandlungsmittel, ein Verfahren zu dessen Herstellung, dessen Verwendung zur Behandlung von Textilien sowie entsprechend behandelte Textilien.

Von modernen Textilmaterialien, die z.B. als Möbelbezugsstoffe oder als textiler Bodenbelag Verwendung finden, erwartet der Verbraucher günstige Eigenschaften im Hinblick auf ihre mechanische Beanspruchbarkeit, also ihre statische und dynamische Belastbarkeit. Vor allem bei Textilmaterialien aus Polware, d.h. Textilien, die durch Schlingen oder aufgeschnittene Schlingen (Velour) eine bestimmte Struktur der Oberfläche besitzen, ist die Erhaltung dieser Oberflächenstruktur während ihrer Gebrauchsdauer von Bedeutung. Häufig weist Teppichware aus Polware schon.nach relativ kurzer Benutzungszeit durch Begehen, schwere aufliegende Möbelstücke oder durch Befahren mit Stühlen auf Rollen Schädigungen auf, die sich durch eine Veränderung der Oberflächenbeschaffenheit auszeichnen. Derart belastete Teppichböden haben Druckstellen, Rillen und ungleichmäßig liegenden Flor (sogenannte Gehstrassen). Möbelbezugsstoffe erleiden gleichartige Veränderungen ihrer Oberflächenbeschaffenheit, vorzugsweise an den am leichtesten zugänglichen und am stärksten belasteten Stellen. Die Folge ist ein ungleichförmiges Aussehen der Textiloberfläche.

Von Textilhilfsmitteln, die zur Ausrüstung moderner Textilmaterialien eingesetzt werden, erwartet der Anwender nicht nur ihre technische Eignung, sondern auch eine sicherheitstechnisch unproblematische Handhabbarkeit. Dies gilt insbesondere auch für den Transport dieser Mittel.

Von Bedeutung für die sicherheitstechnische Handhabbarkeit ist der Flammpunkt dieser Mittel. Der Flammpunkt ist die niedrigste Temperatur, korrigiert auf einen Barometerstand von 101,3 kPa (760 Torr), bei der unter Anwendung einer Zündflamme unter den vorgeschriebenen Versuchsbedingungen die Entflammung der Dämpfe der Probe erfolgt. Der Flammpunkt von brennbaren Flüssigkeiten wird im "geschlossenen Tiegel" nach Pensky-Martens, DIN EN 22 719 (1993), ISO 2719 (1988), bestimmt.

Als brennbar werden solche Flüssigkeiten bezeichnet, die gemäß der Verordnung über brennbäre Flüssigkeiten (Römpp Lexikon Umwelt, Version 1.0, Stuttgart, New York, Georg Thieme Verlag 1997, Stichworte: "Brennbare Flüssigkeiten" und "TRbF") einen Flammpunkt besitzen, bei 35°C weder fest noch salbenförmig sind, bei 50°C einen Dampfdruck von 3 bar oder weniger haben und zu einer der nachstehenden Gefahrenklassen A oder B gehören:
- A:: Flüssigkeiten mit einem Flammpunkt nicht über 100°C, die hinsichtlich der Wasserlöslichkeit nicht die Eigenschaften der Gefahrklasse B aufweisen. Man unterscheidet hierbei:
A I: Flüssigkeiten mit einem Flammpunkt unter 21°C,
A II: Flüssigkeiten mit einem Flammpunkt von 21°C bis 55°C,
A III: Flüssigkeiten mit einem Flammpunkt über 55°C bis 100°C,

B: Flüssigkeiten mit einem Flammpunkt unter 21°C, die sich bei 15°C in Wasser lösen oder deren brennbare flüssige Bestandteile sich bei 15°C in Wasser lösen.

Diese Einteilung spielt auch für die Transportbestimmungen, d.h. die verkehrsrechtlichen Vorschriften für brennbare Flüssigkeiten, eine wesentliche Rolle. Es ist somit im Hinblick auf die Transportbestimmungen vorteilhaft, wenn eine Substanz zumindest in die Gefahrenklasse A III eingestuft werden kann.

Um Fasermaterialien, wie Fäden, Fasern, Geweben und Teppichen, Rutschsicherheit und Widerstandsfähigkeit gegen Trockenschmutz zu verleihen, werden diese Fasermaterialien gemäß DE-OS 1 594 985 mit Textilhilfsmitteln behandelt, bei denen es sich um kolloidale Suspensionen von Silasesquioxanen aus Einheiten der Formel RSiO_{3/2} mit einer Teilchengröße von 10 bis 1000 Angström handelt und R für Methyl, Ethyl, Vinyl, Phenyl und/oder 3,3,3-Trifluorpropylreste steht. Hergestellt werden diese Silasesquioxane durch Zugabe von Silanen der Formel RSi(OR")₃, wobei R" C₁-C₄-Alkylreste oder Reste der Formeln -CH₂CH₂OH, -CH₂CH₂OCH₃, -C(=O)CH₃ oder -CH₂CH₂OC₂H₅ darstellt, zu einer Mischung aus Wasser und oberflächenaktiven Mitteln unter sauren oder basischen Bedingungen.

Die dort beschriebenen Silasesquioxan-Suspensionen sind jedoch relativ unbeständig, in keinem. Fall zur polstabilisierenden Ausrüstung geeignet und besitzen ferner einen niedrigen Flammpunkt.

In der EP-A 0 036 475 ist ein Textilhilfsmittel zur polstabilisierenden Ausrüstung von Textilien aus Chemie- oder Naturfaserstoffen und deren Mischungen beschrieben, welches wirksam, dauerhaft und pflegebeständig ist. Dieses Mittel enthält ebenfalls kolloidale Suspensionen von Organosilasesquioxanen und von Kieselsäure. Die kolloidalen Suspensionen werden durch Kondensation von Silanen der Formel RSi(OR')₃ zusammen mit Silanen der Formel Si(OR')₄ hergestellt. R steht hierbei für einen substituierten oder unsubstituierten C₁-C₇-Kohlenwasserstoffrest, dessen Substituenten Halogenatome, Amino-, Mercapto- oder Epoxygruppen sein können, wobei bis zu 95 mol% der Reste R Methyl sind. R' bedeutet einen Alkylrest mit 1-4 C-Atomen. Die bei der Kondensation entstehenden kolloidalen Suspensionen werden unmittelbar als solche zur Textilbehandlung eingesetzt und besitzen nachteiligerweise einen niedrigen Flammpunkt.

Es bestand daher die Aufgabe, ein Textilhilfsmittel zur Verfügung zu stellen, das zur polstabilisierenden Ausrüstung geeignet ist und gleichzeitig aber eine einfache sicherheitstechnische Handhabung, insbesondere einen möglichst unproblematischen Transport erlaubt.

Gelöst wird die Aufgabe durch die Bereitstellung flammpunktfreier Textilhilfsmittel, die sich sicherheitstechnisch problemlos lagern und transportieren lassen.

Gegenstand der Erfindung sind flammpunktfreie Textilhilfsmittel enthaltend wässrige kolloidale Suspensionen von Organosilasequioxanen, wobei diese Organosilasesquioxane Einheiten der allgemeinen Formel (I)

R¹Si (O)_{3/2} (I)

aufweisen,
worin
- R¹: gleich oder verschieden ist und für einen geradkettigen oder verzweigten C₁-C₁₈-Alkylrest steht, der ein- oder mehrfach durch gleiche oder verschiedene Halogenreste, -NH₂, -SH oder Epoxygruppen substituiert sein kann und/oder bei dem ein- oder mehrere (CH)₂-Gruppen durch -O-, -S- oder -N(H)- ersetzt sein können.

Die erfindungsgemäßen flammpunktfreien Textilhilfsmittel zeichnen sich dadurch aus, dass sie maximal 2,5 Gew.-%, bevorzugt maximal 2,2 Gew.-% und insbesondere maximal 2 Gew.-%, jeweils bezogen auf das gesamte Textilhilfsmittel, eines Alkohols der Formel R²OH enthalten, wobei R² einen geradkettigen oder verzweigten C₁-C₄-Alkylrest darstellt.

Bevorzugt sind erfindungsgemäße Textilhilfsmittel, bei denen R¹ gleich oder verschieden ist und für einen geradkettigen oder verzweigten C₁-C₇-Alkylrest steht, der ein- oder mehrfach durch gleiche oder verschiedene Halogenreste, insbesondere F, Cl oder Br-Reste, -NH₂, -SH oder Epoxygruppen substituiert sein kann und/oder bei dem ein- oder mehrere (CH)₂-Gruppen durch -O-, -S- oder -N(H)- ersetzt sein können.

Besonders bevorzugt sind erfindungsgemäße Textilhilfsmittel, bei denen R¹ gleich ist und für einen geradkettigen oder verzweigten C₁-C₇-Alkylrest steht, der ein- oder mehrfach durch gleiche oder verschiedene Halogenreste, insbesondere F, Cl oder Br-Reste, -NH₂, -SH oder Epoxygruppen substituiert sein kann und/oder bei dem einoder mehrere (CH)₂-Gruppen durch -O-, -S- oder -N(H)- ersetzt sein können.

Wenn die Organosilasesquioxane des erfindungsgemäßen flammpunktfreien Textilhilfsmittels Einheiten der Formel R¹Si(O)_{3/2} mit unterschiedlichen Bedeutungen für R¹ enthalten, so sind üblicherweise bis zu 95 mol%, bevorzugt 50-94 mol% und besonders bevorzugt 80-94 mol% aller Reste R¹ Methyl.

Als Substituenten des Restes R¹, d.h. des C₁-C₁₈-Alkyl, bevorzugt C₁-C₇-Alkylrestes sind besonders der Rest -NH₂ sowie Epoxygruppen geeignet. Als Epoxygruppen haben sich solche der Formel (II) bewährt, 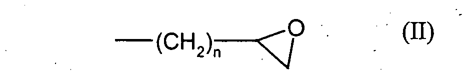 wobei
- n: eine ganze Zahl von 1 bis 18, bevorzugt von 1 bis 7 ist,
wobei ein oder mehrere der Alkylengruppen -(CH₂)- durch -O-, -S- oder -N(H)- ersetzt sein können.

Besonders bevorzugt werden als Epoxygruppen solche der Formeln (III) oder (IV) eingesetzt: 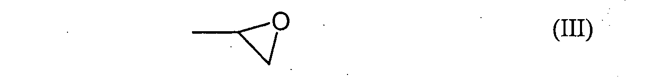 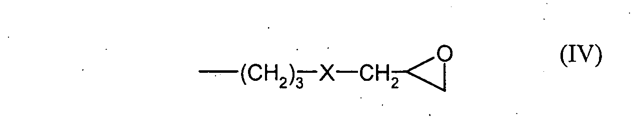 wobei
- x: gleich O, S oder NH ist.

Bevorzugt steht R¹ für Methyl, Ethyl, n-Propyl, Isopropyl, n-Butyl, Isobutyl, tert.-Butyl, n-Pentyl oder 2-Ethylbutyl.

Die Silasesquioxane in den erfindungsgemäßen Textilhilfsmitteln besitzen eine durchschnittliche Teilchengröße von 100-1000 Angström, bevorzugt von 200-600 Angström, bestimmt durch Lichtstreuung nach der Methode von Mie. Auch die Teilchengrößenverteilung ist sehr eng. Die angegebene Teilchengröße ist von.Bedeutung, um eine stabile Suspension zu erhalten. Vor allem höhere als die angegebenen Teilchengrößen sind zu vermeiden, da die Teilchen dann ausfallen.

In einer weiteren Ausführungsform können die in den kolloidalen Suspensionen enthaltenen Organosilasesquioxane neben den Einheiten der Formel (I) auch noch Kieselsäure-Einheiten der Formel Si(O₄)₂ aufweisen.

Gegenstand der Erfindung ist ferner ein Verfahren zur Herstellung dieser flammpunktfreien Textilhilfsmittel durch
(1) Kondensation von einem oder mehreren Silanen der allgemeinen Formel (V)

   R¹-Si(OR²)₃ (V)

   und gegebenenfalls einem oder mehreren Silanen der allgemeinen Formel (VI)

   Si(OR²)₄ (VI)

   worin
   - R¹: gleich oder verschieden ist und für einen geradkettigen oder verzweigten Alkylrest mit 1 bis 18 C-Atomen steht, der ein- oder mehrfach durch gleiche oder verschiedene Halogenreste, -NH₂, -SH oder Epoxygruppen substituiert sein kann und/oder bei dem ein- oder mehrere (CH)₂-Gruppen durch -O-, -S- oder -N(H)- ersetzt sein können, und
   - R²: gleich oder verschieden ist und einen geradkettigen oder verzweigten C₁-C₄-Alkylrest bedeutet,
   in einem Gemisch aus Wasser, einer Puffersubstanz und einer oberflächenaktiven Substanz und
(2) Destillation des Reaktionsgemisches aus (1) bei 55°C bis 100°C unter einem Druck von 950 bis 250 mbar und unter einem Inertgasstrom von 5 bis 50 l/h.

Im erfindungsgemäßen Verfahren werden ein oder mehrere Silane der allgemeinen Formel (V) und gegebenenfalls ein oder mehrere Silane der allgemeinen Formel (VI) eingesetzt.

Bevorzugt werden folgende Silane der allgemeinen Formel (V) eingesetzt: Methyltrimethoxysilan, Methyltriethoxysilan, Methyltriisopropoxysilan, Ethyltri-methoxysilan, Ethyltriethoxysilan, Propyltrimethoxysilan, Isobutyltrimethoxysilan, Isobutyltriethoxysilan oder 2-Ethylbutyltriethoxysilan.

Als Silan der allgemeinen Formel (VI) hat sich besonders Tetraethoxysilan bewährt.

Diese Silane sind entweder käuflich erhältlich oder aber nach dem Fachmann geläufigen Methoden des Standes der Technik herstellbar.

Die erfindungsgemäße Umsetzung wird üblicherweise in Gegenwart mindestens einer oberflächenaktiven Substanz durchgeführt. Hierbei können kationische oder anionische, oberflächenaktive Substanzen, die aus dem Stand der Technik bekannt sind, eingesetzt werden. Neben diesen kationischen oder anionischen oberflächenaktiven Substanzen können auch nichtionische oder amphotere oberflächenaktive Substanzen verwendet werden.

Als anionische oberflächenaktive Mittel kommen aliphatische und/oder aromatische Sulfonsäuren in Betracht, beispielsweise Decyl-, Dodecyl-, Cetyl-, Stearyl-, Myristyl- oder Oleylsulfonsäuren oder deren Alkalisalze.

Als kationische oberflächenaktive Substanzen haben sich beispielsweise Ammoniumsalze von Alkylaminen, quaternäre Ammoniumsalze, Alkylpyridiniumsalze, Imidazolsalze, Imidazoliniumsalze, Salze von Alkyldiaminen und -polyaminen, Salze von acylierten Diaminen und Polyaminen, Salze von acylierten Alkanolaminen, Salze von Estern und Ethern von Alkanolaminen, Alkanolaminethersalze, Alkylethylenharnstoffsalze, Sulfoniumverbindungen, Phosphoniumverbindungen und Aminoxide bewährt.

Werden kationische oberflächenaktive Substanzen verwendet, ist es vorteilhaft, diese in der Form ihrer Halogenide und insbesondere Chloride und Bromide zu verwenden.

Als weitere oberflächenaktive Mittel können beispielsweise solche nichtionogener oder amphoterer Natur eingesetzt werden, bevorzugt in Kombination mit anionischen oder kationischen oberflächenaktiven Mitteln, sofern sie weder auf Grund ihrer Natur noch ihrer Menge einen störenden Einfluss auf die Stabilität der kolloidalen Suspension ausüben.

Die eingesetzte Menge an oberflächenaktiven Substanzen sollte so gering wie möglich sein, da zu hohe Salzkonzentrationen die Stabilität des bei der Kondensation in Schritt (1) entstehenden Sols verschlechtern. Bewährt haben sich Mengen von 0,01 bis 3 Gew.-%, bevorzugt 0,05-2 Gew.-% oberflächenaktive Substanz, bezogen auf das gesamte Reaktionsgemisch.

Die genannten oberflächenaktiven Substanzen haben die Funktion, die gebildeten Teilchen der kolloidalen Suspension zusätzlich zu stabilisieren.

Für die erfolgreiche Durchführung des erfindungsgemäßen Verfahrens ist ferner die Gegenwart mindestens einer den pH-Wert steuernden Puffersubstanz von Bedeutung. Als Puffersubstanzen haben sich beispielsweise Natriumtetraborat, Ammoniumhydrogencarbonat, Natriumhydrogencarbonat oder Kaliumhydrogencarbonat bewährt. Die Puffersubstanz wird in einer Menge von 0,05 bis 4 Gew.-%, bevorzugt von 0,1-2 Gew.-%, bezogen auf das gesamte Reaktionsgemisch eingesetzt. Der pH-Wert des Reaktionsgemisches im Verlauf der Umsetzung liegt im Bereich von 5-12, bevorzugt im Bereich von 8-10.

Durch die Zugabe dieses Puffers gelingt es, das Hydrolyseverhalten der eingesetzten Alkoxysilane und die Kondensation der Silanolgruppen, welche beide pH-Wert abhängig sind, optimal zu steuern.

Die im erfindungsgemäßen Verfahren eingesetzte Menge der Silane der allgemeinen Formeln (V) und gegebenenfalls (VI) liegt bei 0,1-30 Gew.-%, bevorzugt bei 5-22 Gew.-% bezogen auf das gesamte Reaktionsgemisch.

Durch die gleichzeitige Hydrolyse der Silane der allgemeinen Formel (V) und gegebenenfalls (VI) entstehen Mischpolymerisate der Silasesquioxane, in denen die jeweiligen Einheiten R¹Si(O)_{3/2} und gegebenenfalls Si(O₄)₂ in Blockform oder statistisch verteilt vorliegen können. Die bevorzugte Menge an zugesetztem Silan der allgemeinen Formel (VI) liegt im Bereich von 0-50 Gew.-%, bezogen auf die Gesamtmenge der eingesetzten Silane der Formel (V) und (VI), vorzugsweise im Bereich von 0 - 20 Gew.-%, besonders bevorzugt von 0-15 Gew.-%.

Die Kondensation in Schritt (1) des erfindungsgemäßen Verfahrens wird üblicherweise so durchgeführt, dass die Silane der allgemeinen Formel (V) und gegebenenfalls (VI) zu einem Gemisch aus Wasser, der Puffersubstanz und der oberflächenaktiven Substanz zugegeben werden. Dieses Gemisch aus Wasser, Puffersubstanz und oberflächenaktiver Substanz wird in der Regel hergestellt, indem das Wasser vorgelegt und dann die Komponenten Puffersubstanz und oberflächenaktive Substanz zugegeben werden. Die Zugabe der Silane der allgemeinen Formel (V) und gegebenenfalls (VI) in das Gemisch erfolgt vorteilhafterweise gleichförmig und langsam. Hierdurch kann die bereits genannte geringe durchschnittliche Teilchengröße von 100-1000 Angström und eine sehr enge Teilchengrößenverteilung besonders gut erreicht werden. Die Umsetzung selber erfolgt bevorzugt unter Rühren für eine Dauer von bis zu 6 Stunden, bevorzugt bis zu 4 Stunden. Das Verfahren wird in Abwesenheit organischer Lösungsmittel durchgeführt.

Schritt (1) des erfindungsgemäßen Verfahrens zur Herstellung der kolloidalen Suspensionen wird üblicherweise bei Temperaturen im Bereich von 20 bis 80°C durchgeführt. Bevorzugt wird das Verfahren im Bereich von 30 bis 70°C, besonders bevorzugt im Bereich von 50 bis 70°C durchgeführt.

Bei der Reaktion entstehen durch die Kondensation der Silane Alkohole der Formel R²OH, die aus den Alkoxygruppen OR² der eingesetzten Silane der allgemeinen Formeln (V) und (VI) stammen. Ihre Gegenwart beeinflusst den Flammpunkt erheblich. Entscheidend für die vorliegende Erfindung ist, dass diese Alkohole durch eine Destillation weitgehend entfernt werden.

Überraschenderweise hat sich gezeigt, dass das erfindungsgemäße Textilhilfsmittel erhalten wird, wenn die Destillation unter speziellen Bedingungen durchgeführt wird.

Diese Destillation in Schritt (2) des erfindungsgemäßen Verfahrens wird bei einer Temperatur im Bereich von 55°C bis 100°C, vorzugsweise von 60 bis 80°C und besonders bevorzugt von 70 bis 75°C, unter einem Druck von 950 bis 250 mbar, bevorzugt von 900 bis 300 mbar und unter einem Inertgasstrom, bevorzugt einem Stickstoffstrom, von 5 bis 50 l/h, bevorzugt von 20 bis 40 l/h durchgeführt. Die Dauer dieser Destillation liegt bei 4 bis 8 Stunden, vorzugsweise bei 5 bis 7 Stunden.

Die Destillation kann beispielsweise unmittelbar nach Beendigung der Zugabe der Silane (V) und gegebenenfalls (VI) zu dem Gemisch aus Wasser, der Puffersubstanz und der oberflächenaktiven Substanz beginnen. Es ist aber auch möglich, die Kondensation über die Silan-Zugabe hinaus zunächst für einen Zeitraum von bis zu 6 Stunden, bevorzugt 4 Stunden durchzuführen und danach die Destillation anzuschließen.

Ohne weitere Aufarbeitung enthält das erfindungsgemäße Textilhilfsmittel in der kolloidalen Suspension der Organosilasesquioxanen üblicherweise noch mindestens eines der genannten oberflächenaktiven Mittel sowie mindestens eine der genannten Puffersubstanzen.

Üblicherweise besitzt die zur Herstellung des erfindungsgemäßen Textil-behandlungsmittels eingesetzte Reaktionsmischung folgende Zusammensetzung:

| | |
|---|---|
| 0,01 - 3 Gew.-% | mindestens eines oberflächenaktiven Mittels |
| 0,05 - 4 Gew.-% | einer Puffersubstanz |
| 0,1 - 30 Gew.-% | Silane der Formel (V) und gegebenenfalls (VI) |
| 99,84 - 63 Gew.-% | Wasser |

wobei alle genannten Komponenten zusammen 100 Gew.-% ergeben.

Bevorzugt weist die zur Herstellung des erfindungsgemäßen Textil-behandlungsmittels eingesetzte Reaktionsmischung folgende Zusammensetzung auf:

| | |
|---|---|
| 0,01 - 3 Gew.-% | mindestens eines oberflächenaktiven Mittels |
| 0,05 - 4 Gew.-% | einer Puffersubstanz |
| 5 - 22 Gew.-% | Silane der Formel (V) und gegebenenfalls (VI) |
| 94,94 - 71 Gew.-% | Wasser |

wobei alle genannten Komponenten zusammen 100 Gew.-% ergeben.

Für das Verhältnis der beiden Silane (V) und gegebenenfalls (VI) zueinander in diesen Reaktionsmischungen gilt das bereits zuvor ausgeführte.

Das erfindungsgemäße Textilbehandlungsmittel hat dann üblicherweise die folgende Zusammensetzung:

| | |
|---|---|
| 0,01 - 3 Gew.-% | mindestens eines oberflächenaktiven Mittels |
| 0,05 - 4 Gew.-% - | einer Puffersubstanz |
| 2 - 9 Gew.-% | des Organosilasesquioxans |
| 0 - 0,4 Gew.-% | Kieselsäure |
| 0 - 2,5 Gew.-% | eines Alkohols R²OH |
| 97,94- 81,1 Gew.-% | Wasser |

wobei alle genannten Komponenten zusammen 100 Gew.-% ergeben.

Gegenstand der Erfindung ist ferner die Verwendung des flammpunktfreien Textilhilfsmittels zur Ausrüstung von Textilmaterialien.

Als Textilmaterialien können jegliche Chemiefaserstoffe auf organischer oder anorganischer Basis sowie Naturfaserstoffe zum Einsatz kommen. Bevorzugt erfolgt die Anwendung auf einer Pol- oder Florware der zuvor genannten Faserstoffe.

Das nach der Destillation verbleibende Reaktionsgemisch kann unmittelbar zur Behandlung der Textilmaterialien eingesetzt werden. Sofern gewünscht, kann auch noch eine weitere Verdünnung erfolgen.

Die Applikation des Textilbehandlungsmittels kann entweder vor, während oder nach der Einfärbung des Textilmaterials bzw. vor, während oder nach anschließender weiterer Veredelungsschritte erfolgen oder nachträglich nach erfolgter Verarbeitung zu Bezugs-, Polster- oder Bodenbelagstextil und dessen Gebrauch durch Behandlung in der Flotte, Klotzen oder Aufsprühen.

Eine weitere Methode zum Aufbringen der kolloidalen Suspensionen auf das Fasermaterial besteht darin, diese zusammen mit einem Reinigungsmittel zu verwenden, besonders dann, wenn das zu behandelnde Textil durch Gebrauch oder vorhergegangene Verarbeitungsschritte verschmutzt wurde. Vorzugsweise erfolgt die Ausrüstung bisher noch nicht vom Hersteller ausgerüsteter Ware nach ihrer Nassreinigung durch Aufsprühen des Textilbehandlungsmittel auf die Ware.

Das erfindungsgemäße Textilhilfsmittel zeichnet sich durch die Flammpunktfreiheit aus und besitzt trotzdem gleichzeitig eine gute polstabilisierende Wirkung. Selbst bei einer Temperatur von 98-100°C ist keine Flammpunkt zu messen, eine Entflammung der Probendämpfe ist nicht zu beobachten, das System siedet vielmehr. Der Transport ist somit sicherheitstechnisch unbedenklich. Die Suspensionen verfügen zudem über eine ausgezeichnete Stabilität.

### Beispiele:

### Beispiel 1

In 1098 g destilliertes Wasser werden 22 g Dinatriumtetraborat und 75 g eines kationischen Tensids (N-C_{12/14}-Alkyl-N,N-dimethyl-N-benzylammoniumchlorid) bei Raumtemperatur gelöst und auf 70°C erwärmt. Nach Erreichen dieser Temperatur werden 1980 g Methyltriethoxysilan innerhalb von 4 Stunden zugegeben, wobei die Temperatur des Reaktionsgemisches auf 70°C gehalten wird. Nach beendeter Zugabe wird das entstandene Sol für eine Dauer von 3 Stunden bei 70°C gerührt.

500,0 g dieses Kondensationsproduktes (Ethanolgehalt bestimmt über GC: 11 Gew.-%) werden 6 Stunden bei 70°C unter dem in Tabelle 1 angegebenen Druck und unter gleichzeitigem Strippen mit 30 l/h N2 (Kontrolle über aufgeschraubten Blasenzähler) über Brücke und Kühlfalle destilliert.

**Tabelle 1:**

| Reaktions-zeit [h] | Reaktions-temperatur [°C] | Druck [mbar] | Destillat-menge [g] | Ethanolgehalt der Suspension [Gew.-%] (lt. GC) |
|---|---|---|---|---|
| 6 | 70 | 380-450 | 74,9 | 1,25 |

Die Messung der Teilchengröße nach Mie führt zu keinem Ergebnis, die Emulsion ist zu fein. Die Teilchengröße ist somit kleiner als 0,1 µm. Der Trockengehalt wird zweifach bestimmt und beträgt 7,16 bzw. 7,17 Gew.-%.

382,0 g dieses Kondensationsproduktes mit einem Ethanolgehalt von 1,25 Gew.-% laut GC werden durch Zugabe von 59,46 g Wasser 10 Minuten bei Raumtemperatur verrührt und auf einen Trockengehalt von 6,2 Gew.-% eingestellt. Diese Suspension hat einen Ethanolgehalt von 1,09 Gew.-% Ethanol (bestimmt über GC) und einen zweifach bestimmten Trockengehalt von 6,01/6,27 Gew.-%. Bei der Suspension handelt es sich um eine leicht bewegliche, flüssige, schwach opaque Flüssigkeit. Die Prüfung gemäß DIN EN 22719 (1993), ISO 2719 (1988) ergibt keinen Flammpunkt.

### Beispiel 2:

In 1098 g destilliertes Wasser werden 22 g Dinatriumtetraborat und 75 g eines kationischen Tensids (N-C_{12/14}-Alkyl-N,N-dimethyl-N-benzylammoniumchlorid) bei Raumtemperatur gelöst und auf 70°C erwärmt. Nach Erreichen dieser Temperatur werden 1980 g Methyltriethoxysilan innerhalb von 4 Stunden zugegeben, wobei die Temperatur des Reaktionsgemisches auf 70°C gehalten wird. Nach beendeter Zugabe wird das entstandene Sol während 3 Stunden bei 70°C gerührt.

500,0 g des so erhaltenen Kondensationsproduktes mit einem Ethanolgehalt laut GC von 11 Gew.-% werden innerhalb von 3 Stunden bei einer Temperatur von 100°C bei 760 mbar ohne Stickstoffstrom über Brücke und Kühlfalle destilliert.

**Tabelle 2:**

| Zeitverlauf | Reaktions-temperatur [°C] | Destillat-menge | Ethanolgehalt der Suspension [Gew.-%] (lt. GC) |
|---|---|---|---|
| nach 1 h | 90-92 | 31,2 g | 7,0 |
| nach 2 h | 92-95 | 59,2 g | 3,83 |
| nach 3 h | 95-97 | 75,9 g | 2,36 |

Das nach 3 Stunden erhaltene Kondensationsprodukt ist gröber als das Kondensationsprodukt aus Beispiel 1 (leichter weißer Bodensatz). Die nach der Methode von Mie bestimmte Teilchengröße liegt bei 2,7 µm. Der Trockengehalt wird zweifach bestimmt und beträgt 7,23 bzw. 7,19 Gew.-%. Die Prüfung gemäß DIN EN 22719 (1993), ISO 2719 (1988) ergibt für die Probe nach 3 Stunden Reaktionszeit keinen Flammpunkt.

366,6 g dieses Kondensationsproduktes (Trockengehalt: 7,21 Gew.-%) werden nach Zugabe von 59,7 g Wasser 10 Minuten bei Raumtemperatur verrührt und damit auf 6,2 Gew.-% Trockenmasse eingestellt. Die erhaltene Suspension besitzt laut GC einen Ethanolgehalt von 2,07 Gew.-% und ist weiß und flüssig. Der Trockengehalt wird zweifach bestimmt und beträgt 6,02 bzw. 6,02 Gew.-%.

### Vergleichsbeispiel 1:

In 1098 g destilliertes Wasser werden 22 g Dinatriumtetraborat und 75 g eines kationischen Tensids (N-C_{12/14}-Alkyl-N,N-dimethyl-N-benzylammoniumchlorid) bei Raumtemperatur gelöst und auf 70°C erwärmt. Nach Erreichen dieser Temperatur werden 1980 g Methyltriethoxysilan innerhalb von 4 Stunden zugegeben, wobei die Temperatur des Reaktionsgemisches auf 70°C gehalten wird. Nach beendeter Zugabe wird das entstandene Sol während 3 Stunden bei 70°C gerührt.

366,6 g des so erhaltenen Kondensationsproduktes mit einem Trockengehalt von 7,21 Gew.-% werden nach Zugabe von 59,7 g Wasser 10 Minuten bei Raumtemperatur verrührt und dadurch auf 6,2 Gew.-% Trockengehalt eingestellt. Die Suspension besitzt laut GC einen Ethanolgehalt von 11 Gew.-% und ist flüssig und weiß. Die Prüfung gemäß DIN EN 22719 (1993), ISO 2719 (1988) ergibt einen Flammpunkt von 50°C.

### Anwendungsbeispiel 1:

### Laboranschmutztest in Anlehnung an DIN 54 324 (Stuhlrollenversuch)

Eine Polyamid 6.6-Tufting-Velour-Ware Qualität "Holiday" (450 g/m2 Polgewicht) wird nach dem Färben im Foulardverfahren vor dem Trocknen behandelt, wobei eine Flottenaufnahme von 100 % erreicht wird.

Anschließend wird die Ware 5 Minuten bei 120°C getrocknet, gleichmäßig geschoren und der Rücken mit einem handelsüblichen Latex-Planschaum beschichtet.

Aus dem resultierenden Material werden jeweils gleiche Muster entnommen. Diese Muster werden zunächst mit je 10 g eines synthetischen Schmutzes folgender Zusammensetzung angeschmutzt:

| | |
|---|---|
| 1932 g | Schamotte |
| 40 g | Eisenoxid, schwarz |
| 20 g | Eisenoxid, gelb |
| 8 g | Ruß |
| 1000 g | Wasser |

Die Belastung der Proben erfolgt nach dem Stuhlrollenversuch gemäß DIN-Vorschrift 54 324 bei einer Rollenbelastung von insgesamt 60 kg und einer Änderung der Rollendrehrichtung nach jeweils 50 Umdrehungen. Nach diesem Stuhlrollenversuch wird das Anschmutzverhalten gemäß DIN 54002 bestimmt. Die Ergebnisse sind in Tabelle 3 dargestellt.

**Tabelle 3**

| Eingesetztes Textilhilfsmittel aus | Referenz-probe | Beispiel 1 | | | Beispiel 2 (Produkt nach 3 h Reaktions-zeit) | | | Vergleichs-beispiel 1 | | |
|---|---|---|---|---|---|---|---|---|---|---|
| Eingesetzte Menge in g/l | 0 | 10 | 20 | 40 | 10 | 20 | 40 | 10 | 20 | 40 |
| Anschmutzverhalten Bewertung Graumäßstab DIN 54002 | 2 | 4 | 4 | 4 | 3 | 3 | 3 | 4 | 4 | 4 |

(Skala: 1 = sehr starke Veränderung; 5 = keine Veränderung)

Im Gegensatz zum Textilhilfsmittel gemäß Vergleichsbeispiel führen die erfindungsgemäßen Textilhilfsmittel nicht zu einer guten polstabilisierenden Ausrüstung, sondern besitzen darüber hinaus keinen Flammpunkt.

### Vergleichsbeispiel 2

In 1098 g destilliertes Wasser werden 22 g Dinatriumtetraborat und 22 g und 75 g eines kationischen Tensids (N-C_{12/14}-Alkyl-N,N-dimethyl-N-benzylammoniumchlorid) bei Raumtemperatur gelöst und auf 70°C erwärmt. Nach Erreichen dieser Temperatur werden 1980 g Methyltriethoxysilan innerhalb von 4 Stunden zugegeben, wobei die Temperatur des Reaktionsgemisches auf 70°C gehalten wird. Nach beendeter Zugabe wird das entstandene Sol während 3 Stunden bei 70°C gerührt.

500,0 g des so erhaltenen Kondensationsproduktes werden innerhalb von 6 Stunden bei 50°C im leichten Vakuum (siehe Tabelle 4) und unter gleichzeitigem Strippen mit 30 l/h N2 (aufgeschraubten Blasenzähler mit kräftigem N2-Strom durchspült). unter Verwendung von Brücke und Kühlfalle destilliert.

**Tabelle 4:**

| Zeitverlauf | Reaktions-temperatur [°C] | Druck [mbar] | Ethanol-gehalt der Suspension [Gew.-%] (lt. GC) |
|---|---|---|---|
| Nach 2 h | 50 | 200 | 8,68 |
| Nach 1 h | 50 | 200 | 6,55 |

Die Destillation wird nach 4 Stunden abgebrochen, da sie sehr schlecht durchführbar ist. Bei einem Druck von ≤ 200 mbar schäumt das Reaktionsgemisch mehrmals stark über, bei einem Druck > 200 mbar ist keine vernünftige Destillation durchzuführen.

## Patentansprüche

1. Flammpunktfreie Textilhilfsmittel, enthaltend wässrige kolloidale Suspensionen von Organosilasesquioxanen, wobei diese Organosilasesquioxane Einheiten der allgemeinen Formel (I)
R¹Si(O)_{3/2} (I)
aufweisen,
worin
R¹ gleich oder verschieden ist und für einen geradkettigen oder verzweigten C₁-C₁₈-Alkylrest steht, der ein- oder mehrfach durch gleiche oder verschiedene Halogenreste, -NH₂, -SH oder Epoxygruppen substituiert sein kann und/oder bei dem ein oder mehrere (CH)₂-Gruppen durch -O-, -S- oder -N(H)- ersetzt sein können.

2. Flammpunktfreie Textilhilfsmittel gemäß Anspruch 1, **dadurch gekennzeichnet, dass** sie maximal 2,5 Gew.-%, bevorzugt maximal 2,2 Gew.-% und insbesondere maximal 2 Gew.-%, jeweils bezogen auf das gesamte Textilhilfsmittel, eines Alkohols der Formel R²OH enthalten, wobei R² einen geradkettigen oder verzweigten C₁-C₄-Alkylrest darstellt.

3. Flammpunktfreie Textilhilfsmittel gemäß Anspruch 1 oder 2, **dadurch gekennzeichnet, dass** R¹ gleich oder verschieden ist und für einen geradkettigen oder verzweigten C₁-C₇-Alkylrest steht, der ein- oder mehrfach durch gleiche oder verschiedene Halogenreste, insbesondere F, Cl oder Br-Reste, -NH₂, -SH oder Epoxygruppen substituiert sein kann und/oder bei dem ein oder mehrere (CH)₂-Gruppen durch -O-, -S- oder -N(H)- ersetzt sein können.

4. Flammpunktfreie Textilhilfsmittel gemäß einem oder mehreren der Ansprüche 1-3, **dadurch gekennzeichnet, dass** die Organosilasesquioxane Einheiten der Formel R¹Si(O)_{3/2} mit unterschiedlichen Bedeutungen für R¹ enthalten, wobei bis zu 95 mol%, bevorzugt 50-94 mol% und besonders bevorzugt 80-94 mol% aller Reste R¹ Methyl darstellen.

5. Flammpunktfreie Textilhilfsmittel gemäß einem oder mehreren der Ansprüche 1-4, **dadurch gekennzeichnet, dass** es sich bei den Substituenten des Restes R¹ um Epoxygruppen der Formel (II) handelt, 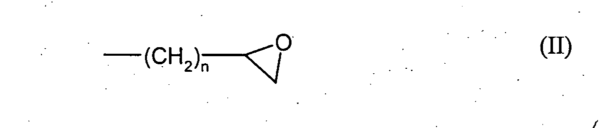 wobei
n eine ganze Zahl von 1 bis 18, bevorzugt von 1 bis 7 ist,
wobei ein oder mehrere der Alkylengruppen -(CH₂)- durch -O-, -S- oder -N(H)- ersetzt sein können.

6. Flammpunktfreie Textilhilfsmittel gemäß Anspruch 5, **dadurch gekennzeichnet, dass** es sich bei den Epoxygruppen um Gruppen der Formeln (III) oder (IV) handelt, 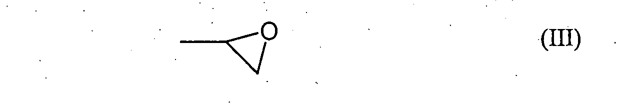 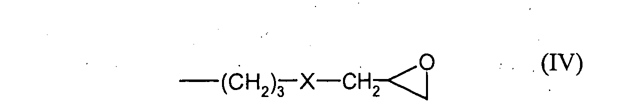 wobei
X gleich O, S oder NH ist.

7. Flammpunktfreie Textilhilfsmittel gemäß einem oder mehreren der Ansprüche 1-6, **dadurch gekennzeichnet, dass** R¹ für Methyl, Ethyl, n-Propyl, Isopropyl, n-Butyl, Isobutyl, tert.-Butyl, n-Pentyl oder 2-Ethylbutyl steht.

8. Flammpunktfreie Textilhilfsmittel gemäß einem oder mehreren der Ansprüche 1-7, **dadurch gekennzeichnet, dass** die Organosilasesquioxane eine durchschnittliche Teilchengröße von 100-1000 Angström, bevorzugt von 200-600 Angström besitzen.

9. Flammpunktfreie Textilhilfsmittel gemäß einem oder mehreren der Ansprüche 1-8, **dadurch gekennzeichnet dass** die in den kolloidalen Suspensionen enthaltenen Organosilasesquioxane neben den Einheiten der Formel (I) auch Kieselsäure-Einheiten der Formel Si(O₄)₂ aufweisen.

10. Flammpunktfreies Textilhilfsmittel gemäß einem oder mehreren der Ansprüche 1-9, **dadurch gekennzeichnet, dass** es die folgende Zusammensetzung besitzt:
| | |
|---|---|
| 0,01 - 3 Gew.-% | mindestens eines oberflächenaktiven Mittels, |
| 0,05 - 4 Gew.-% | einer Puffersubstanz, |
| 2 - 9 Gew.-% | des Organosilasesquioxan |
| 0 - 0,4 Gew.-% | Kieselsäure, |
| 0 - 2,5 Gew.-% | eines Alkohols R²OH und |
| 97,94 - 81,1 Gew.-% | Wasser, |
wobei alle genannten Komponenten zusammen 100 Gew.-% ergeben.

11. Verfahren zur Herstellung dieser flammpunktfreien Textilhilfsmittel gemäß einem oder mehreren der Ansprüche 1-10, durch
(1) Kondensation von einem oder mehreren Silanen der allgemeinen Formel (V)
R¹-Si(OR²)₃ (V)
und gegebenenfalls einem oder mehreren Silanen der allgemeinen Formel (VI)
Si(OR²)₄ (VI)
worin
R¹ gleich oder verschieden ist und für einen geradkettigen oder verzweigten Alkylrest mit 1 bis 18 C-Atomen steht, der ein- oder mehrfach durch gleiche oder verschiedene Halogenreste, -NH₂, -SH oder Epoxygruppen substituiert sein kann und/oder bei dem einoder mehrere (CH)₂-Gruppen durch -O-, -S- oder -N(H)- ersetzt sein können, und
R² gleich oder verschieden ist und einen geradkettigen oder verzweigten C₁-C₄-Alkylrest bedeutet,
in einem Gemisch aus Wasser, einer Puffersubstanz und einer oberflächenaktiven Substanz und
(2) Destillation des Reaktionsgemisches aus (1) bei 55°C bis 100°C unter einem Druck von 950 bis 250 mbar und unter einem Inertgasstrom von 5 bis 50 l/h.

12. Verfahren gemäß Anspruch 11, **dadurch gekennzeichnet, dass** als Silane der allgemeinen Formel (V) Methyltrimethoxysilan, Methyltriethoxysilan, Methyltriisopropoxysilan, Ethyltrimethoxysilan, Ethyltriethoxysilan, Propyl-trimethoxysilan, Isobutyltrimethoxysilan, Isobutyltriethoxysilan oder 2-Ethylbutyltriethoxysilan eingesetzt werden.

13. Verfahren gemäß Anspruch 11 oder 12, **dadurch gekennzeichnet, dass** als Silan der allgemeinen Formel (VI) Tetraethoxysilan eingesetzt wird.

14. Verfahren gemäß einem oder mehreren der Ansprüche 11-13, **dadurch gekennzeichnet, dass** kationische oberflächenaktive Substanzen, bevorzugt Ammoniumsalze von Alkylaminen, quaternäre Ammoniumsalze, Alkylpyridiniumsalze, Imidazolsalze, Imidazoliniumsalze, Salze von Alkyldiaminen und -polyaminen, Salze von acylierten Diaminen und Polyaminen, Salze von acylierten Alkanolaminen, Salze von Estern und Ethern von Alkanolaminen, Alkanolaminethersalze, Alkylethylen-hamstoffsalze, Sulfoniumverbindungen, Phosphoniumverbindungen oder Aminoxide eingesetzt werden.

15. Verfahren gemäß einem oder mehreren der Ansprüche 11-14, **dadurch gekennzeichnet, dass** als Puffersubstanz Natriumtetraborat, Ammonium-hydrogencarbonat, Natriumhydrogencarbonat oder Kaliumhydrogencarbonat eingesetzt werden.

16. Verfahren gemäß einem oder mehreren der Ansprüche 11-15, **dadurch gekennzeichnet, dass** die Kondensation in Schritt (1) so durchgeführt wird, dass die Silane der allgemeinen Formel (V) und gegebenenfalls (VI) zu einem Gemisch aus Wasser, der Puffersubstanz und der oberflächenaktiven Substanz zugegeben werden.

17. Verfahren gemäß einem oder mehreren der Ansprüche 11-16, **dadurch gekennzeichnet, dass** die Destillation in Schritt (2) bei einer Temperatur im Bereich von 60 bis 80°C, bevorzugt von 70 bis 75°C, unter einem Druck von 900 bis 300 mbar und unter einem Stickstoffstrom von 5 bis 50 l/h, bevorzugt von 20 bis 40 l/h durchgeführt wird.

18. Verfahren gemäß einem oder mehreren der Ansprüche 11-17, **dadurch gekennzeichnet, dass** die Destillation unmittelbar nach Beendigung der Zugabe der Silane (V) und gegebenenfalls (VI) zu dem Gemisch aus Wasser, der Puffersubstanz und der oberflächenaktiven Substanz begonnen wird.

19. Verwendung des flammpunktfreien Textilhilfsmittels gemäß einem oder mehreren der Ansprüche 1-10 zur Ausrüstung von Textilmaterialien.

20. Textilmaterial, ausgerüstet mit einem flammpunktfreien Textilhilfsmittel gemäß einem oder mehreren der Ansprüche 1-10.
